(19) Europäisches Patentamt
European Patent Office
Office européen des brevets

(11) **EP 0 717 760 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.[6]: **C08K 5/10**
// (C08K5/10, 5:103, 5:11)

(21) Anmeldenummer: **94926883.3**

(22) Anmeldetag: **25.08.1994**

(86) Internationale Anmeldenummer:
**PCT/EP94/02814**

(87) Internationale Veröffentlichungsnummer:
**WO 95/06683 (09.03.1995 Gazette 1995/11)**

(54) **GLEITMITTELMISCHUNGEN FÜR NT-PVC-FOLIEN**

LUBRICANT MIXTURES FOR PVC FOILS PRODUCED ACCORDING TO A LOW-TEMPERATURE PROCESS

MELANGES LUBRIFIANTS POUR FEUILLES DE PVC PRODUITES SELON UN PROCEDE A BASSE TEMPERATURE

(84) Benannte Vertragsstaaten:
**DE IT NL**

(30) Priorität: **03.09.1993 DE 4329763**

(43) Veröffentlichungstag der Anmeldung:
**26.06.1996 Patentblatt 1996/26**

(73) Patentinhaber: **Henkel Kommanditgesellschaft auf Aktien**
**40191 Düsseldorf (DE)**

(72) Erfinder:
• **WEDL, Peter**
**D-27568 Bremerhaven (DE)**
• **BRAND, E.-Udo**
**D-27572 Bremerhaven (DE)**
• **KLAMANN, Jörg-Dieter**
**D-27574 Bremerhaven (DE)**
• **FLEISCHER, Erwin**
**D-27619 Schiffdorf (DE)**

(56) Entgegenhaltungen:
**EP-A- 0 064 697          DE-A- 2 262 266**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft Gleitmittelmischungen für kalandrierte NT-PVC-Folien, enthaltend Partialester von oligomeren Polyolen und Komplexester aus Dicarbonsäuren, Polyolen und Monocarbonsäuren sowie die Verwendung dieser Mischungen als Gleitmittel für kalandrierte NT-PVC-Folien (Niedertemperaturverfahren).

Hart-PVC-Folien können nach dem Niedertemperaturverfahren hergestellt werden. Das Niedertemperatur-Verfahren, auch Luvitherm- oder Genotherm-Verfahren genannt, ist eine bekannte Technologie zur Herstellung von Hart-PVC-Folien, das eingehend in Becker/Braun, Kunststoff-Handbuch, Band 2/2, Seite 1006 bis 1007, Carl Hanser Verlag, München (1986) beschrieben wird. Dabei werden Emulsions-PVC-Typen mit K-Werten von 70 bis 80 eingesetzt. Als Stabilisatoren werden entweder Diphenyl-Thioharnstoff oder flüssige Zinn-Stabilisatoren, z. B. Dioctyl-Sn-mercaptid, verwendet. Der Herstellungsprozeß der Folien vollzieht sich in mehreren Stufen. Zunächst erfolgt die Angelierung des PVC-dry blends in einer kontinuierlichen Geliermaschine (z. B. Planetenwalzenextruder). Auf dem direkt oder über ein Mischwalzwerk nachgeschalteten Kalander wird die Folie bei relativ niedrigen Temperaturen (160 - 190 °C) ausgewalzt und dann in einem weiteren Verfahrensschritt thermisch über Schmelzwalzen bei hohen Temperaturen (220 - 290 °C) nachvergütet. Anschließend können die Folien noch gereckt werden. Gereckte Folien finden insbesondere als Klebebänder Anwendung, ungereckte Folien, die z. B. tiefgezogen werden, kommen als Verpackungsbehälter zum Einsatz.

Die gereckten Folien, die als Klebebänder verwendet werden sollen, werden einseitig mit einem Primer und anschließend mit einer Klebstoffschicht ausgestattet. Auf der Rückseite werden derartige Folien häufig bedruckt.

Anstelle der üblichen lösemittelhaltigen Druckfarben und Primer werden aus arbeitsphysiologischen Gründen auch vermehrt wasserhaltige Produkte bevorzugt. Damit wasserhaltige Produkte eingesetzt werden können, ist eine gute Oberflächenbenetzbarkeit der Folien Voraussetzung.

Die für die Herstellung der Hart-PVC-Folien der vorstehend genannten Art verwendeten Emulsions-PVC-Typen enthalten Emulgatoren in einer Größenordnung von circa 2 Gew.-%. Aufgrund dieses Anteils an Emulgatoren ist prinzipiell eine gute Oberflächenbenetzbarkeit der Folien gegeben. Diese gute Oberflächenbenetzbarkeit wird aber in der Regel verschlechtert, da die NT-PVC-Folien Zusätze an hydrophoben Gleitmitteln bis zu 5 Gewichtsteilen pro 100 Gewichsteilen PVC (phr) enthalten. Diese für das Herstellverfahren der NT-PVC-Folien notwendigen Gleitmitteln müssen eine gute Verträglichkeit in der Matrix PVC/Emulgator aufweisen, damit die Anforderungen an die Folienqualitäten wie die Transparenz, Glanz, Fließlinienfreiheit und Oberflächenstruktur erfüllt werden. Bislang wurden als Gleitmittel Montansäureester einschließlich der teilverseiften Calcium enthaltenden Formen derselben, aber insbesondere Vollester des Ethylenglykols eingesetzt, da sie die Anforderungen hinsichtlich Verträglichkeit in der Matrix PVC/Emulgator zufriedenstellend erfüllen. Aber auch die genannten Montansäureester haben Grenzen hinsichtlich ihrer Verträglichkeit. So wirken bereits bei einer Dosierung ab 2 phr diese Montansäureester hydrophobierend, so daß die Bedruckbarkeit der NT-PVC-Folien mit wasserhaltigen Druckfarben und Primern stark beeinträchtigt wird.

Aus der europäischen Patentanmeldung EP-A-64 697 ist es bekannt, daß Ester von Oligomeren des Glycerins, Trimethylolpropans und Pentaerythrits, die gemischt oder blockweise sowie gegebenenfalls für sich allein oligomerisiert vorliegen können, als Gleitmittel für die vorgebende Verarbeitung von Polyvinylchlorid verwendet werden können. Dabei sind die oligomerisierten Alkohole zu 30 bis 100 % mit $C_8$ bis $C_{36}$ Fettsäuren verestert. Die partiell oder vollständig veresterten Oligomere der Polyole eignen sich insbesondere für die Herstellung sehr dünner Folien mit hohem Glanz und hoher Festigkeit. Eigene Untersuchungen haben jedoch ergeben, daß nur bestimmte Ester mit ausgewählten Veresterungsgraden der oligomerisierten Polyole als Gleitmittel für Hart-PVC-Folien geeignet sind, die als Klebebänder eingesetzt werden sollen. So treten bei Zugabe dieser Gleitmittel in Mengen bis zu 6 Gewichtsteilen pro 100 Gewichtsteilen Polyvinylchlorid bereits hydrophobierende Eigenschaften auf, die die Bedruckbarkeit der Klebebänder insgesamt verschlechtern. Bei niedrigeren Veresterungsgraden der Ester der oligomeren Polyole wird dieser Effekt zwar nicht beobachtet, aber diese zeigen eine nur mäßige Gleitmittelwirkung.

DE-A-2262266 offenbart Gleitmittelmischungen aus A) Partialestern aliphatischer Polyole und langkettigen C12-30 Monocarbonsäureestern und B) Komplexestern aus Dicarbonsäuren, aliphatischen Polyolen und aliphatischen C12-30 Monocarbonsäuren sowie deren Verwendung in PVC-Mischungen.

Aus der deutschen Offenlegungsschrift DE-A-36 30 778 ist ein Gleitmittelsystem für die Verarbeitung von Hart-PVC-Folien bekannt, welches neben weiteren Komponenten unter anderem sogenannte Mischester aus Dicarbonsäuren, Polyolen und Monocarbonsäuren enthält. Diese Mischester werden häufig in der Literatur auch als Komplexester bezeichnet. Obgleich diese Gleitmittelmischungen mit den Komplexestern sehr wohl ein sehr gutes Gleitmittelsystem für die Verarbeitung von Hart-PVC sind, sind diese Systeme nur wenig geeignet zur Herstellung von NT-PVC-Folien für die Klebebänder, da insbesondere bei höheren Einsatzmengen diese stark hydrophobierend wirken, so daß Bedruckbarkeit insbesondere von wasserhaltigen Primern und Druckfarben nicht ausreichend gewährleistet ist.

Aufgabe der vorliegenden Erfindung war es, Gleitmittel für NT-PVC-Folien bereitzustellen, die

- eine gute Bedruckbarkeit von NT-PVC-Folien mit wasserhaltigen Druckfarben bzw. Primern ermöglichen,
- als Gleitmittel auch in hohen Dosierungen mit der Matrix PVC/Emulgator so gut verträglich sind, daß eine einwandfreie Folienqualität mit ausreichender Transparenz, Glanz, Fließlinienfreiheit und guter Oberflächenstruktur ohne Streifen und Mikroholes gewährleistet ist,

- den komplizierten rheologischen Anforderungen des Kalandrierprozesses für NT-Folien als Gleitmittel gerecht wird,
- auf Rohstoffen basiert, welche auch längerfristig verfügbar sind und somit im Vergleich zu den zur Zeit verwendeten Montansäureestern wirtschaftliche Vorteile bieten.

Das Ziel der Erfindung besteht darin, Gleitmittel bereitzustellen, die allen diesen Anforderungen, nicht nur einem Teil derselben, entsprechen.

Die vorliegende Erfindung betrifft dementsprechend Gleitmittelmischungen für NT-PVC-Folien enthaltend

A) Partialester aus Oligomeren von 3- bis 6-wertigen aliphatischen Alkoholen mit mindestens 2 Monomereinheiten und Monocarbonsäuren, wobei 5 bis 75 % der Hydroxylgruppen der Oligomeren verestert sind, und
B) Komplexester, aus

a) Dicarbonsäuren mit 2 bis 22 C-Atomen,
b) aliphatischen Polyolen mit 2 bis 6 Hydroxylgruppen und
c) Monocarbonsäuren mit 6 bis 32 C-Atomen.

Bei der Komponente A) handelt es sich um prinzipiell aus dem Stand der Technik bekannte Verbindungen, die beispielsweise in der bereits zitierten europäischen Patentanmeldung EP-A-64 697 beschrieben werden. Als 3- bis 6-wertige aliphatische Alkohole können im Sinne der Erfindung Glycerin, Pentaerythrit, Trimethylolpropan, 1,2,4-Trihydroxybutan, Pentite und Hexite eingesetzt werden. Bevorzugt werden im Sinne der Erfindung Oligomere von Glycerin, Pentaerythrit und/oder Trimethylolpropan. Die Oligomeren der 3- bis 6-wertigen aliphatischen Alkohole können auf verschiedene Weise erhalten werden. So kann man die monomeren 3- bis 6-wertigen aliphatischen Alkohole im basischen Medium bei erhöhter Temperatur kondensieren. Dabei können gleiche oder verschiedene aliphatische 3- bis 6-wertige Alkohole miteinander kondensiert werden, so daß entweder Oligomere eines einzigen Alkohols oder aber auch Oligomere von Alkoholmischungen entstehen können. Bevorzugt im Sinne der Erfindung werden Oligomere eines einzigen aliphatischen Alkohols und insbesondere Oligomere von Glycerin, Pentaerythrit und/oder Trimethylolpropan.

Die Oligomeren sollen im Sinne der Erfindung mindestens 2 Monomereinheiten enthalten. Damit sind die niedrigsten Vertreter, die im Sinne der Erfindung geeignet sind, Diglycerin, Ditrimethylolpropan und Dipentaerythrit. Besonders bevorzugt werden Oligomere des Glycerins mit 3 bis 5 Monomereinheiten. Bei solchen Oligomeren handelt es sich in der Regel um statistische Oligomere.

Die Oligomeren der 3- bis 6-wertigen aliphatischen Alkohole mit mindestens 2 Monomereinheiten sind partiell verestert mit Monocarbonsäuren. Besonders geeignet sind aliphatische Monocarbonsäuren mit 6 bis 32 C-Atomen, vorzugsweise 14 bis 22 C-Atomen. Über die Monocarbonsäure können die Gleitmittelwirkungen des Partialesters in entscheidenden Maße mitbestimmt werden. So sind bei vergleichbaren Partialestern mit vergleichbaren Veresterungsgeraden solche Partialester in ihrer Schmiereigenschaft besser, die längerkettige Monocarbonsäuren enthalten, so daß beispielsweise niedere Dosierungen möglich sind. Geeignete Monocarbonsäuren der beschriebenen Art sind Erucasäure, Palmitinsäure, Stearinsäure, Ölsäure, Laurinsäure, Montansäure sowie natürlich vorkommene Fettsäuremischungen, wie sie aus natürlichen Ölen und Fetten nach deren Spaltung erhalten werden können. Insbesonders geeignet sind Stearinsäure und/oder Palmitinsäure, deren technische Mischung beispielsweise im Handel erhältlich ist.

Eine weitere wichtige Kenngröße der Komponente A) ist deren Veresterungsgrad, d.h. die Anzahl der Hydroxylgruppen der Oligomeren der 3- bis 6-wertigen aliphatischen Alkohole, die verestert sind mit Monocarbonsäuren der beschriebenen Art. Nach eignen Erkenntnissen zeigen Partialester der beschriebenen Art eine besonders gute Bedruckbarkeit für wäßrige Druckfarben und Primern, wenn 20 bis 50 % der Hydroxylgruppen der oligomeren Polyole verestert sind.

Die zweite obligatorische B) Komponente der Gleitmittelmischung sind Komplexester, die ebenfalls aus dem Stand der Technik an und für sich bekannt sind, beispielsweise aus der schon zitierten deutschen Offenlegungsschrift DE-A-36 30 778. Als Dicarbonsäure zur Herstellung der Komplexester sind prinzipiell geeignet: Oxal-, Malon-, Bernstein-, Glutar-, Adipin-, Pimelin-, Kork-, Azelain-, Sebazin-, Nonandicarbon-, Undecandicarbon-, Eikosandicarbon-, Malein-, Fumar-, Citracon-, Mesacon-, Itakon-, Cyclopropandicarbon-, Cyclobutandicarbon-, Cylopentandicarbon-, Campher-, Hexahydrophthal-, Phthal-, Terephthal-, Isophthal-, Naphthal- und Diphenyl-o,o'-dicarbonsäure.

Als aliphatische Polyole mit 2 bis 6 Hydroxylgruppen sind folgende Verbindungen geeignet: Ethylenglykol, 1,2-Propylenglykol, 1,3-Propylenglykol, 1,4-Butandiol, 2,3-Butandiol, 1,5-Pentandiol, 1,6-Hexandiol, Glycerin, Trimethylolpropan, Erythrit, Pentaerythrit, Dipentaerythrit, Xylit, Mannit und Sorbit.

Als Monocarbonsäure eignen sich geradkettige oder verzweigte, synthetische oder native Säuren, beispielsweise Laurin-, Myristin-, Palmitin-, Margarin-, Stearin-, Arachidin-, Behen-, Lignocerin-, Cerotinsäure, Montansäure, Öl-, Elaidin-, Eruka-, Linol-, Linolen- und Isostearinsäure, ferner Gemische dieser Säuren, insbesondere solche, wie sie aus natürlichen Fetten und Ölen gewonnen werden können.

Im Sinne der Erfindung werden insbesondere Komplexester bevorzugt, die aus aliphatischen Dicarbonsäuren mit 4 bis 8 C-Atomen, Polyolen mit 3 oder 4 Hydroxylgruppen und aliphatischen Monocarbonsäuren mit 14 bis 22 C-Atomen aufgebaut sind. Hervorragende Ergebnisse werden mit Komplexestern aus Adipinsäure, Pentaerythrit und Monocarbonsäuren mit 14 bis 22 C-Atomen erzielt.

Im Sinne der Erfindung kommen solche Komplexester bevorzugt zum Einsatz, die ein Molverhältnis von Dicarbonsäure : Polyol : Monocarbonsäure von

$$(n - 1) : n : nm - 2(n - x)$$

aufweisen, wobei n eine ganze Zahl von 2 bis 11 ist und m die Anzahl der Hydroxylgruppen des Polyols bedeutet, so daß m Zahlenwerte von 2 bis 6 annehmen kann. Durch den Wert von n wird das mittlere Molekulargewicht der Mischester weitgehend festgelegt. Je höher die Werte von n gewählt werden, um so höher liegen auch die mittleren Molekulargewichte der erhaltenen Produkte. Im Zusammenhang mit der Erfindung liegen die bevorzugten Werte für n im Bereich von 1 bis 8. Der Wert für x liegt im Bereich von 1 bis m/2 und legt fest, ob ein Mischester mit oder ohne freie Hydroxylgruppen vorliegt.

Weitere allgemeine Angaben zu Komplexestern und deren Verwendung als Gleitmittel für Polyvinylhalogenid sind den deutschen Offenlegungsschriften DE-A-19 07 768 und DE-A-22 62 266 zu entnehmen, die hiermit auch zum Gegenstand der vorliegenden Offenbarung gemacht werden.

Die erfindungsgemäßen Gleitmittelmischungen enthalten die Komponente A), d.h. die Partialester der oligomeren Polyole, bevorzugt in höheren Mengen als die Komponente B), d.h. den Komplexester. Besonders bevorzugt werden Gleitmittelmischungen, die 60 bis 90 Gew.-% Partialester der oligomeren Polyole und 10 bis 40 Gew.-% Komplexester enthalten.

Falls gewünscht, können den Gleitmittelmischungen auch andere, dem Fachmann bekannte Gleitmittel zugegeben werden, wie beispielsweise Metallseifen, insbesondere Salze von organischen Monocarbonsäuren mit Metallen der zweiten Haupt- und/oder Nebengruppe des Periodensystems, wie Calciumseifen und Zinkseifen, oder auch Polyethylenwachse, oxidierte Polyethylenwachse, Wachsester etc.

Die erfindungsgemäße Gleitmittelmischung eignet sich insbesondere für die Herstellung von NT-PVC-Folien aus Emulsions-PVC mit K-Werten im Bereich von 70 bis 80. Dazu werden die erfindungsgemäßen Gleitmittelmischungen in der Regel in Mengen von 0,5 bis 7 phr, vorzugsweise 2 bis 6 und insbesondere 3 bis 4 phr, d.h. Gewichtsteile pro 100 Gewichtsteile PVC, eingesetzt.

Das Emulsions-PVC kann auf an sich bekannte Weise stabilisiert sein, d.h. mit flüssigen Zinnstabilisatoren wie Dioctylzinnmercaptit oder auch mit Diphenylthioharnstoff.

Bei Einsatz der erfindungsgemäßen Gleitmittelmischungen ist eine gute Bedruckbarkeit auch mit wäßrigen Druckmittelfarben und Primern gewährleistet. Weiterhin erfüllen die erfindungsgemäßen Gleitmittel die eingangs beschriebenen komplizierten rheologischen Anforderungen des Kalandrierprozesses für NT-Folien, so daß die damit hergestellten NT-PVC-Folien in ihrer Qualität, d. h. in ihrem Aussehen, einwandrei sind.

Um den komplizierten rheologischen Anforderungen an den Kalandrierprozeß gerecht zu werden, wird der Partialester aus Oligomeren als hochverträgliches internes Gleitmittel eingesetzt, während der Komplexester als gut verträgliches externes Gleitmittel zum Einsatz kommt.

Weiterer Gegenstand der vorliegenden Erfindung ist die Verwendung von Mischungen enthaltend

A) Partialester aus Oligomeren von 3- bis 6-wertigen aliphatischen Alkoholen mit mindestens 2 Monomereinheiten und Monocarbonsäuren, wobei 5 bis 75 % der Hydroxylgruppe der oligomeren Polyole verestert sind, und
B) Komplexester, aus

   a) Dicarbonsäuren mit 2 bis 22 C-Atomen,
   b) aliphatischen Polyolen mit 2 bis 6 Hydroxylgruppen und
   c) Monocarbonsäuren mit 6 bis 32 C-Atomen

als Gleitmittel für NT-PVC-Folien. Dabei werden Mengen von 0,5 bis 7 phr, vorzugsweise 2 bis 6 und insbesondere 3 bis 4 phr, eingesetzt.

Beispiele

## A) Herstellung der Gleitmittelmischung

Durch mechanisches Vermischen der Einzelbestandteile wurde das erfindungsgemäße Gleitmittelgemisch hergestellt (Angabe in GT = Gewichtsteile). Die hinter der chemischen Bezeichnung angegebenen Zahlenverhältnisse bedeuten die Molverhältnisse der Ausgangsstoffe in der aus der Bezeichnung ersichtlichen Reihenfolge.

## Beispiel 1)

| 25 GT | Pentaerythrit-adipat-stearat (7:6:16) |
|-------|---------------------------------------|
| 75 GT | Polyglycerinpartialstearat (Oligomerisierungsgrad : 3,5 Veresterungsgrad : 45 %) |

Vergleichsbeispiel 1

Pentaerythrit-adipat-stearat (7:6:16)

Vergleichsbeispiel 2

Polyglycerinpartialstearat gemäß Beispiel 1

Vergleichsbeispiel 3

Polyglycerinpartialstearat
(Oligomerisierungsgrad : 3,5
Veresterungsgrad : 88 %)

Vergleichsbeispiel 4

Ethylenglykol-di-montanat (derzeitiger Standard zur Herstellung von NT-Folien)

Vergleichsbeispiel 5

Grundansatz ohne Gleitmittel

## B) Anwendung

Die jeweils unter A) beschriebenen Gleitmittelgemische wurden in Zusatzmengen von 2, 4 und 6 phr zu dem Grundansatz aus

| 100 GT | Emulsions-PVC mit K-Wert 78 (Hostalit[R] E 2078) und |
|--------|------------------------------------------------------|
| 0,6 GT | Diphenylthioharnstoff                                |

gegeben.

Das rheologische Verhalten wurde auf dem COLLIN-Meßwalzwerk 450x252 mm als Spaltlast gemessen. Die Walzentemperatur betrug vorne 165°C, hinten 175 °C; die Walzengeschwindigkeit betrug im Versuchszeitraum von 90 - 100 Sekunden 7,5 m/min und im Versuchszeitraum von 155 - 160 Sekunden 23,4 m/min; Spaltweite 0,2 mm. Die gefundene Spaltlast der erfindungsgemäßen Mischung muß im Bereich des Vergleichsesters (Vergleichsbeispiel 4) liegen, damit den komplizierten rheologischen Anforderungen des Kalandrierprozesses Rechnung getragen wird und eine Folie mit guter Oberflächenstruktur, welche fließlinienfrei ist und auch frei von Mikroholes, produziert werden kann.

Für die Ermittlung der Bedruckbarkeit mit wäßrigen Systemen wurde der Randwinkeltest nach Dipl.-Ing. Opkircher durchgeführt. Nach diesem Test wurden aus den oben genannten PVC-Formmassen hergestellte Folien mit je einem Tropfen destilliertem Wasser versetzt. Anschließend wurde der Randwinkel zwischen Folie und Tropfen mittels Randwinkelprüfgerät der Fa. BE.T.EX; U. Dürbusch, Typ RW. U.N. bestimmt. Je kleiner der ermittelte Randwinkel, desto besser ist die Benetzbarkeit der Folienoberfläche. In Tabelle I sind die Ergebnisse zusammengefaßt.

## Tabelle I: Rheologisches Verhalten und Benetzbarkeit mit Wasser

| PVC-Formmassen mit Beispiel | Zugabe-menge in GT | Spaltlast (KN) Versuchszeitraum 90-100 s [m/min] 7,5 | 155-160 s 23,4 | Randwinkel (°) Walzengeschwindigkeit |
|---|---|---|---|---|
| Beispiel 1 | 2 | 37 | 41 | 30 |
|  | 4 | 19 | 37 | 20 |
|  | 6 | 13 | 31 | 25 |
| Vergleichsbei-spiel 1 | 2 | 38 | 42 | 45 |
|  | 4 | 32 | 38 | 45 |
|  | 6 | 27 | 33 | 45 |
| Vergleichsbei-spiel 2 | 2 | 38 | 43 | 30 |
|  | 4 | 17 | 38 | 30 |
|  | 6 | 11 | 23 | 20 |
| Vergleichsbei-spiel 3 | 2 | 31 | 42 | 35 |
|  | 4 | 14 | 27 | 35 |
|  | 6 | 11 | 17 | 45 |
| Vergleichsbei-spiel 4 | 2 | 37 | 42 | 30 |
|  | 4 | 16 | 37 | 25 |
|  | 6 | 13 | 29 | 25 |
| Vergleichsbei-spiel 5 | 0 | 40 | 42 | 0 |

Aus Tabelle 1 ist ersichtlich, daß die erfindungsgemäße Gleitmittelmischung in den 3 Zugabemengen (2, 4 und 6 GT) den Vorgaben des Vergleichsbeispiels 4 entspricht und somit die rheologischen Anforderungen erfüllt. Auch die Wasserbenetzbarkeit ist ausgezeichnet.

## EP 0 717 760 B1

**Patentansprüche**

1.  Gleitmittelmischungen für Niedertemperaturverfahren-PVC-Folien, enthaltend

    A) Partialester aus Oligomeren von 3- bis 6-wertigen aliphatischen Alkoholen mit mindestens 2 Monomereinheiten und Monocarbonsäuren, wobei 5 bis 75 % der Hydroxylgruppen der Oligomeren verestert sind, und
    B) Komplexester, aus

    a) Dicarbonsäuren mit 2 bis 22 C-Atomen,
    b) aliphatischen Polyolen mit 2 bis 6 Hydroxylgruppen und
    c) Monocarbonsäuren mit 6 bis 32 C-Atomen.

2.  Gleitmittelmischungen nach Anspruch 1, dadurch gekennzeichnet, daß Partialester aus Oligomeren von Glycerin, Pentaerythrit und/oder Trimethylolpropan, vorzugsweise Oligomere des Glycerins mit 3 bis 5 Monomereinheiten, enthalten sind.

3.  Gleitmittelmischungen nach Anspruch 1 oder 2, dadurch gekennzeichnet, daß Partialester aus aliphatischen $C_6$-$C_{32}$-Monocarbonsäuren, vorzugsweise aliphatischen $C_{14}$-$C_{22}$-Monocarbonsäuren, enthalten sind.

4.  Gleitmittelmischung nach einem oder mehreren der Ansprüche 1 bis 3, dadurch gekennzeichnet, daß Partialester enthalten sind, in denen 20 bis 50 % der Hydroxylgruppen der oligomeren Polyole verestert sind.

5.  Gleitmittelmischung nach Anspruch 1, dadurch gekennzeichnet, daß in den Komplexestern B) das Molverhältnis von Dicarbonsäure : Polyol : Monocarbonsäure

    $$(n-1) : n : nm-2 (n-x)$$

    beträgt, wobei n eine ganze Zahl von 2 bis 11, m, die Anzahl der Hydroxylgruppen des Polyols, eine Zahl im Bereich von 2 bis 6 und x eine Zahl im Bereich von 1 bis m/2 bedeuten.

6.  Gleitmittelmischung nach Anspruch 5, dadurch gekennzeichnet, daß sie Komplexester aus aliphatischen Dicarbonsäuren mit 4 bis 8 C-Atomen, Polyolen mit 3 oder 4 Hydroxylgruppen und aliphatischen Monocarbonsäuren mit 14 bis 22 C-Atomen enthalten.

7.  Gleitmittelmischungen nach Anspruch 5 oder 6, dadurch gekennzeichnet, daß sie Komplexester aus Adipinsäure, Pentaerythrit und Monocarbonsäuren mit 14 bis 22 C-Atomen enthalten.

8.  Gleitmittelmischung nach einem oder mehreren der Ansprüche 1 bis 7, dadurch gekennzeichnet, daß sie

    60 bis 90 Gew.-% Partialester aus oligomeren Polyolen und
    10 bis 40 Gew.-% Komplexester

    enthalten.

9.  Verwendung von Mischungen enthaltend

    A) Partialester aus Oligomeren von 3- bis 6-wertigen aliphatischen Alkoholen mit mindestens 2 Monomereinheiten und Monocarbonsäuren, wobei 5 bis 75 % der Hydroxylgruppen der oligomeren Polyole verestert sind, und
    B) Komplexester, aus

    a) Dicarbonsäuren mit 2 bis 22 C-Atomen,
    b) aliphatischen Polyolen mit 2 bis 6 Hydroxylgruppen und
    c) Monocarbonsäuren mit 6 bis 32 C-Atomen

    als Gleitmittel für NT-PVC-Folien.

**10.** Verwendung nach Anspruch 9, dadurch gekennzeichnet, daß die Mischungen in Mengen von 0,5 bis 7 phr, vorzugsweise 2 bis 6 phr, eingesetzt werden.

**Claims**

1. Lubricant mixtures for PVC films made by the low-temperature method containing

   A) partial esters of oligomers of trihydric to hexahydric aliphatic alcohols containing at least two monomer units and monocarboxylic acids, 5 to 75% of the hydroxyl groups of the oligomers being esterified, and
   B) complex esters of

      a) dicarboxylic acids containing 2 to 22 carbon atoms,
      b) aliphatic polyols containing 2 to 6 hydroxyl groups and
      c) monocarboxylic acids containing 6 to 32 carbon atoms.

2. Lubricant mixtures as claimed in claim 1, characterized in that they contain partial esters of oligomers of glycerol, pentaerythritol and/or trimethylol propane, preferably oligomers of glycerol containing 3 to 5 monomer units.

3. Lubricant mixtures as claimed in claim 1 or 2, characterized in that they contain partial esters of aliphatic $C_{6-32}$ monocarboxylic acids, preferably aliphatic $C_{14-22}$ monocarboxylic acids.

4. A lubricant mixture as claimed in one or more of claims 1 to 3, characterized in that they contain partial esters in which 20 to 50% of the hydroxyl groups of the oligomeric polyols are esterified.

5. A lubricant mixture as claimed in claim 1, characterized in that, in the complex esters B), the molar ratio of dicarboxylic acid to polyol to monocarboxylic acid is

$$(n-1) : n : nm-2 (n-x)$$

   where n is an integer of 2 to 11, m - the number of hydroxyl groups of the polyol - is a number of 2 to 6 and x is a number of 1 to m/2.

6. A lubricant mixture as claimed in claim 5, characterized in that they contain complex esters of aliphatic dicarboxylic acids containing 4 to 8 carbon atoms, polyols containing 3 or 4 hydroxyl groups and aliphatic monocarboxylic acids containing 14 to 22 carbon atoms.

7. Lubricant mixtures as claimed in claim 5 or 6, characterized in that they contain complex esters of adipic acid, pentaerythritol and monocarboxylic acids containing 14 to 22 carbon atoms.

8. A lubricant mixture as claimed in one or more of claims 1 to 7, characterized in that they contain 60 to 90% by weight of partial esters of oligomeric polyols and 10 to 40% by weight of complex esters.

9. The use of mixtures containing

   A) partial esters of oligomers of trihydric to hexahydric aliphatic alcohols containing at least two monomer units and monocarboxylic acids, 5 to 75% of the hydroxyl groups of the oligomeric polyols being esterified, and
   B) complex esters of

      a) dicarboxylic acids containing 2 to 22 carbon atoms,
      b) aliphatic polyols containing 2 to 6 hydroxyl groups and
      c) monocarboxylic acids containing 6 to 32 carbon atoms

   as lubricants for PVC films made by the low-temperature method.

10. The use claimed in claim 9, characterized in that the mixtures are used in quantities of 0.5 to 7 phr and preferably in quantities of 2 to 6 phr.

**Revendications**

1. Mélanges lubrifiants pour feuilles de PVC produites par un procédé à basse température, contenant

   A) des esters partiels d'oligomères d'alcools aliphatiques tri- à hexavalents comportant au moins 2 unités monomères et d'acides monocarboxyliques, où de 5 à 75 % des groupes hydroxyle des oligomères sont estérifiés,

   et

   B) des esters complexes constitués

   a) d'acides dicarboxyliques avec $C_2$ à $C_{22}$ atomes de carbone,
   b) de polyols aliphatiques ayant de 2 à 6 groupes hydroxyle et
   c) d'acides monocarboxyliques avec $C_6$ à $C_{32}$ atomes de carbone.

2. Mélanges lubrifiants selon la revendication 1,
   caractérisés en ce qu'
   ils contiennent des esters partiels d'oligomères de glycérol, de pentaérythritol et/ou de triméthylolpropane, de préférence des oligomères de glycérol comportant de 3 à 5 unités monomères.

3. Mélanges lubrifiants selon la revendication 1 ou 2,
   caractérisés en ce qu'
   ils contiennent des esters partiels d'acides monocarboxyliques en $C_6$ à $C_{32}$ aliphatiques, de préférence d'acides monocarboxyliques en $C_{14}$ à $C_{22}$ aliphatiques.

4. Mélanges lubrifiants selon une ou plusieurs des revendications 1 à 3,
   caractérisés en ce qu'
   ils contiennent des esters partiels dans lesquels de 20 à 50 % des groupes hydroxyle des polyols oligomères sont estérifiés.

5. Mélanges lubrifiants selon la revendication 1,
   caractérisés en ce que
   dans les esters complexes B) le rapport molaire acide dicarboxylique:polyol:acide monocarboxylique s'élève à

   $$(n-1) : n : nm-2 (n-x)$$

   n étant un nombre entier de 2 à 11, m, nombre des groupes hydroxyle du polyol, étant un nombre compris entre 2 et 6 et x étant un nombre compris entre 1 et m/2.

6. Mélanges lubrifiants selon la revendication 5,
   caractérisés en ce qu'
   ils contiennent des esters complexes d'acides dicarboxyliques aliphatiques avec $C_4$ à $C_8$ atomes de carbone, de polyols comportant 3 ou 4 groupes hydroxyle et d'acides monocarboxyliques aliphatiques avec $C_{14}$ à $C_{22}$ atomes de carbone.

7. Mélanges lubrifiants selon la revendication 5 ou 6,
   caractérisés en ce qu'
   ils contiennent des esters complexes d'acide adipique, de pentaérythritol et d'acides monocarboxyliques avec $C_{14}$ à $C_{22}$ atomes de carbone.

8. Mélanges lubrifiants selon une ou plusieurs des revendications 1 à 7,
   caractérisés en ce qu'
   ils contiennent de :

   60 à 90 %    en poids d'esters partiels de polyols oligomères
               et

10 à 40 %     en poids d'esters complexes.

9. Utilisation de mélanges comprenant

A) des esters partiels d'oligomères d'alcools aliphatiques tri- à hexavalents avec au moins 2 unités monomères et des acides monocarboxyliques, de 5 à 75 % des groupes hydroxyle des polyols oligomères étant estérifiés, et
B) des esters complexes,

a) d'acides dicarboxyliques avec $C_2$ à $C_{22}$ atomes de carbone,
b) de polyols aliphatiques ayant de 2 à 6 groupes hydroxyle et
c) d'acides monocarboxyliques avec $C_6$ à $C_{32}$ atomes de carbone,

comme lubrifiants pour feuilles de NT-PVC.

10. Utilisation selon la revendication 9,
caractérisée en ce que
les mélanges sont utilisés à des quantités de 0,5 à 7 parties en poids pour 100 parties en poids de PVC (phr), de préférence de 2 à 6 phr.